# EUROPEAN PATENT APPLICATION

(11) **EP 2 692 269 A1**
(43) Date of publication of application: **05.02.2014**
(21) Application number: 13190501.0
(22) Date of filing: 23.09.2008
(51) Int. Cl.: A47J 37/12

(54) **Low oil volume fryer with automatic filtration and top-off capability**

(30) Priority: 27.09.2007 US 904358
(62) Divisional of application: 08834005.4
(71) Applicant: Restaurant Technology, Inc., Oak Brook, IL 60523 (US)
(72) Inventor: Lackman, Lamont Eric, Keithville, LA Louisiana 71047 (US); Hutchinson, Charles, Milton, Shreveport, LA Louisiana 71106 (US)
(74) Representative: von Kreisler Selting Werner

(57) **Abstract**

A multi-function system for automatically filtering and maintaining cooking oil in fryer pots of a deep fryer having a deep fryer (10) and a plurality of fryer pots (20, 25, 30) is provided. Each of the plurality of fryer pots contains at least a first temperature sensor and a second temperature sensor. The deep fryer is capable of operating in an automatic filling mode to maintain an oil level when the first sensor senses a first predetermined oil temperature and an automatic filtration mode to allow filtration of oil in one of the plurality of fryer pots after the first sensor senses a first predetermined oil temperature.

## Description

### BACKGROUND OF THE INVENTION

### 1. Field of the Invention

The present invention relates to a gas fryer. More particularly, the present invention relates to a gas fryer having a low oil volume (LOV) configuration, automatic filtration and automatic oil top-off capability to extend cooking oil life.

### 2. Description of Related Art

Gas fired deep fryers that are used in the commercial cooking industry must be able to quickly heat oil and cook large amounts of food product to meet customers' expectations. The deep fryer must maintain a sufficient depth and volume of oil to cook the desired volume of food. Further, the cooking oil must be as free of debris as possible during the cooking process to extend its useful life. Additionally, vendors must balance the customers' expectations with the high cost of cooking oil and fryer pot maintenance issues.

During the cooking process, large amounts of oil are absorbed by food products resulting in loss of oil volume. The reduction in oil volume equates to a reduction in oil depth in the fryer pot and product may not be cooked appropriately. Without an automatic system to maintain the oil at an optimal level and optimal temperature the operator could overlook the oil level while cooking and produce low quality and possibly unsafe product.

In addition to keeping the fryer pot filled to an optimal level, cooking oil must also be properly filtered to produce the best product. The oil remaining after repeated cooking cycles becomes filled with debris due to constant use. Accordingly, there is a need to extend the usable life of the unabsorbed oil and to keep the unabsorbed oil clean during the cooking process.

Further, an optimal fryer pot size must be used to conserve oil, yet maintain equipment integrity. Although various designs of gas fired fryer pots have been developed in an effort to improve the overall cooking efficiency and useful life, drawbacks still exist. Many such pots require large oil volumes due to their size, while others give rise to large heat transfer volumes, cool zone volumes and temperature gradients that present the possibility of induced stress in the fryer pot walls.

Accordingly, there exists a need for a gas fired deep fryer that is capable of automatically filtering and maintaining a desired oil level in a low oil volume fryer pot.

### SUMMARY OF THE INVENTION

The present disclosure provides for a low oil volume fryer that has automatic filtration and top-off capability in a gas fired deep fryer.

The present disclosure also provides for a gas fired deep fryer that filters used cooking oil to extend the life of the cooking oil.

The present disclosure further provides for a gas fired deep fryer that activates a pump and a solenoid valve associated with one or more of a plurality of fryer pots to maintain the volume of cooking oil only when a temperature sensor associated with the one or more fryer pots detects that the cooking oil has reached a predetermined temperature.

The present disclosure still further provides for a deep fryer that maintains the volume of cooking oil in one or a plurality of fryer pots when a predetermined low temperature has been detected indicating the oil level has dropped in the pot, wherein a pump and a solenoid valve is opened in a particular fryer pot to commence filling.

The present disclosure provides for a gas fired deep fryer that maintains the volume of cooking oil in a fryer pot in response to a temperature sensor in a particular pot.

The present disclosure also provides for a fryer pot having offset sidewalls and front and back walls to thereby reduce the volume of the fryer pot. The offset walls also act to reduce the size of the cold zone and subsequently the temperature gradient around the perimeter of the pot wall. The reduction in temperature gradient equates to reduced expansion induced stresses in the pot wall.

The present disclosure further provides for a deep fryer that introduces new oil into one or more of the plurality of fryer pots in response to a low level of oil in a particular pot, the oil being introduced from above the existing oil in the fryer pot by means of separate piping to minimize new oil contamination by used oil.

The present disclosure yet further provides for a deep fryer having two pumps; one of the two pumps for pumping new cooking oil above the oil line and the other of the two pumps for filtering used cooking oil.

The present disclosure still yet further provides for gas fired deep fryer having a fryer pot that includes a filter sequence of bubbling for a period of between 5 to 15 seconds prior to draining the oil the stir up the debris and allow it to be carried from the fryer pot during draining.

The present disclosure also provides for a fryer pot that has a zone at the interface of the fryer pot wall and the basket support rack that can collect crumbs and debris. A unique rack is configured which spaces the support bars to minimize the crumb collecting zone.

The present disclosure further provides for a system that is capable of activating a gas burner after an automatic filter sequence only after specifically detecting the presence of cooking oil in the fryer pot to prevent scorching.

These and other benefits and advantages are achieved by a multi-function system for automatically filtering and maintaining cooking oil in fryer pots of a deep fryer having a deep fryer and a plurality of fryer pots disposed within said deep fryer. Each of the plurality of fryer pots contains at least a first temperature sensor and a second temperature sensor. The deep fryer is capable of operating in an automatic filling mode to maintain an oil level when the first sensor senses a first predetermined oil temperature and an automatic filtration mode to allow filtration of oil in one of the plurality of fryer pots after the first sensor senses a first predetermined oil temperature.

A multi-function system for automatically filtering and maintaining cooking oil in fryer pots of a deep fryer having a deep fryer; and a plurality of fryer pots disposed within the deep fryer. Each of the plurality of fryer pots having a pair of opposed endwalls and a pair of opposed sidewalls and a bottom wall. Each of the pair of opposed endwalls has a first vertical portion and a second vertical portion that are each connected by an angled offset portion to decrease a volume of said fryer pot. Each of the plurality of fryer pots containing at least a first temperature sensor and a second temperature sensor. Wherein the deep fryer is capable of operating in an automatic filtration mode to allow filtration after the first sensor senses a first predetermined oil temperature and an automatic filling mode to maintain an oil level when the first sensor senses the first predetermined oil temperature.

### BRIEF DESCRIPTION OF THE DRAWINGS

Other and further benefits, and advantages and features of the present disclosure will be understood by reference to the following specification in conjunction with the accompanying drawings, in which like reference characters denote like elements of structure.
FIG. 1 illustrates a front perspective view of a gas fired deep fryer having three fryer pots and internal reservoir, according to the present invention;
FIG. 2 illustrates a rear perspective view of a fryer pot having temperature sensors, according to the present invention;
FIG. 3 illustrates a cross-sectional view of the fryer pot of FIG. 2 taken along line 3-3;
FIG. 4 illustrates a section perspective view of the fryer pot of having a support rack, according to the present invention;
FIG. 5 illustrates a front perspective view of the fryer pot having temperature sensors, linear motion motors, and drain and fill valves, according to the present invention;
FIG. 6 illustrates three solenoid valves that are each separately activated to fill respective fryer pots and the pump, according to the present invention;
FIG. 7 illustrates a side section view of the deep fryer housing, according to the present invention;
FIG. 8 illustrates an exploded view of a filter pan of the present invention;
FIG. 9 illustrates a front section view of the fryer pot according FIGS. 2 through 5 of the present invention; and

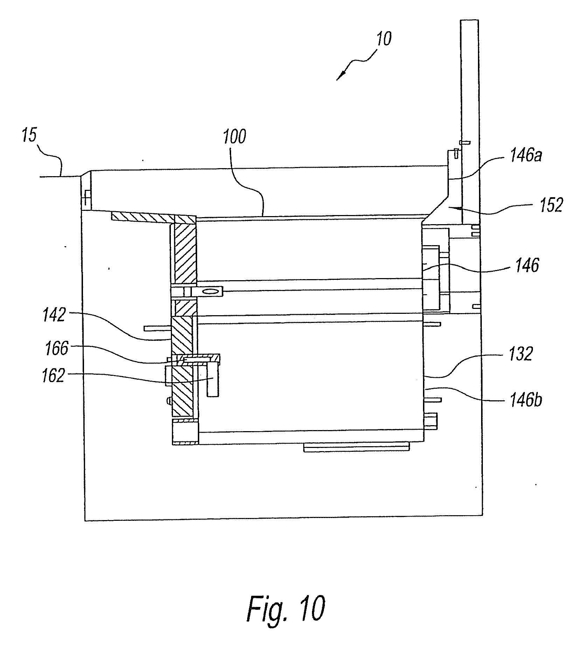

FIG. 10 illustrates a side section view of the fryer pot of FIGS. 2 through 5 according to the present invention.

### DETAILED DESCRIPTION OF THE PREFERRED EMBODIMENT

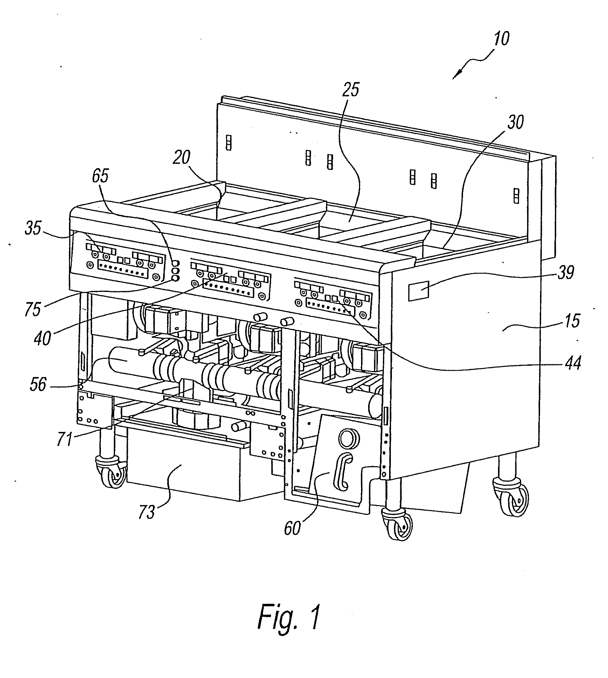

Referring to FIG. 1, a front perspective view of a gas fired deep fryer is shown, and generally referred to by reference numeral 10. Deep fryer 10 has a housing 15 and three deep fryer pots 20, 25 and 30. Pots 20, 25 and 30 each contains oil for deep frying foods commonly used in the commercial food industry. Pots 20, 25 and 30 each has a dedicated control panel 35, 40 and 44, respectively, that controls aspects of cooking for the particular pot. Housing 15 also has an oil reservoir 60 and an indicator lamp 65 operatively associated with oil reservoir 60. Housing 15 also has individual doors (not shown) that are opened to provide access to oil reservoir 60. Further the doors can also be opened and used for periodic maintenance necessary for commercial cooking systems. Housing 15 also has an indicator lamp 75 which is energized to indicate the need for filtration. While housing 15 is shown having three fryer pots, the housing could contain as few as two and as many as twelve fryer pots depending upon the needs of the food service professional.

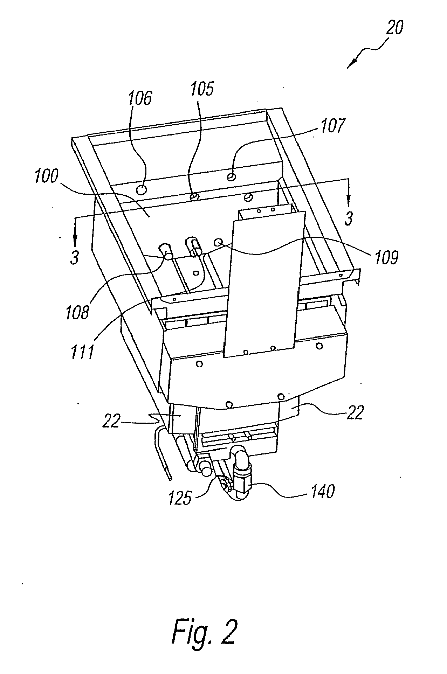

Referring to FIGS. 2 through 4, an individual deep fryer pot 20 is shown. Deep fryer pots 25 and 30 of FIG. 1 each have the same elements and function as deep fryer pot 20. Deep fryer pot 20 has gas fired burners 22 for heating oil in a cooking area 100. Fryer pot 20 also has a submersible primary oil level sensor 105, an optional safety backup submersible oil level sensor 106 and top off oil inlet 107. Fryer pot 20 also has a fryer high limit probe 108, an auxiliary heater probe heater 109 and a fryer temperature probe 111. Submersible sensors 105 and 106 are preferably bimetallic thermal sensors but could also be continuous temperature referencing sensors.

Fryer pot 20 has a drain valve 155 driven by one of a pair of linear motion motors 130 that drains used oil from pot 20. Pot 20 also has a pipe system 125 that feeds used oil into pot 20 via an oil return valve 140 driven by the other of the pair of linear motion motors 130. Individual pot 20 has a remotely located solenoid valve 135 and pump 160 associated therewith that operates to feed new oil to pot 20 through piping 165 terminating at top off inlet 107. Piping 165 is separate from piping 125 that feeds used oil to pot 20. Solenoid valve 135 is opened and closed in response to temperature sensor 105.

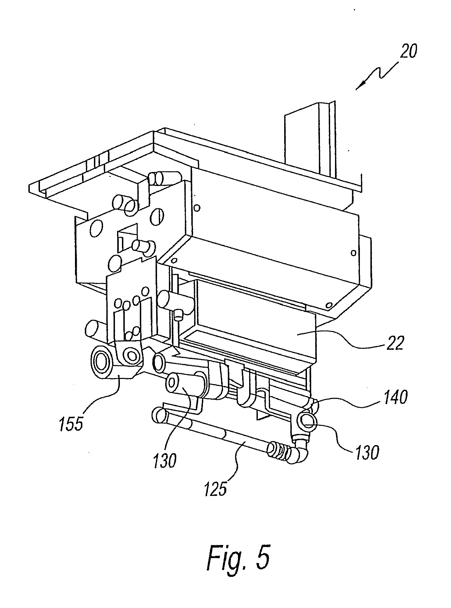

As shown in FIG. 5, there are three solenoid valves 135, 145 and 150. Solenoid valves 145 and 150 are operatively connected to fill pots 25 and 30, respectively, in response to submersible temperature sensors disposed in those pots. Pump 160 serves three solenoid valves 135, 145 and 150 depending upon the level of cooking oil in a respective pot.

Operation will be described with respect to fryer pot 20. In operation, new oil pump 160 can only be enabled by submersible temperature sensor 105 to commence an automatic filling cycle or mode of fryer pot 20 once sensor 111 senses oil temperature of at least approximately 300° F. Temperature sensor 105 is then enabled to energize solenoid valve 135 and new oil pump 160. Submersible temperature sensor 105 will energize solenoid valve 135 and new oil pump 160 only at predetermined temperature points of approximately 300° F. (an open position) and approximately 270° F. (a closed position). The purpose of optional backup safety sensor 106 is to prevent inadvertent operation of pump 160 and inappropriately filling of pot 20 and a possible over fill scenario.

Alternatively, more sophisticated controls utilizing continuous temperature referencing sensors can also be used. This would allow an adjustable relationship between the operating temperatures of the oil top off system and the current set point of the hot cooking oil. For example, French fries cooking at 340° F. would have an engagement temperature of 290° F. to 300° F. or 40° F. to 50° F. below setpoint. Chicken products for example, cooking at 360° F. would have an engagement temperature of 320° F. to 310° F. or 40° F. to 50° F. below setpoint.

When temperature sensor 105 senses a temperature of less than approximately 270° F., it will activate pump 160 and solenoid valve 135. A temperature of less than approximately 270° F. indicates to sensor 105 that it is no longer submersed in oil and that filling must begin to return the proper oil volume to pot 20. Once submersible temperature sensor 105 senses a temperature above approximately 300° F., it will open, thus stopping the filling of pot 20. A temperature above approximately 300° F. indicates that sensor 105 is again immersed in oil and that pot 20 has the desired oil volume.

If sensor 105 fails to stop operation of pump 160, optional sensor 106, a second submersible thermal sensor that is located higher in pot 20, is activated. Sensor 106 is wired in series electrically with pump 160 to stop the filling operation. The second thermal sensor 106 acts as a safety feature to prevent pot 20 from overflowing. Further, an additional safety feature is an off delay timer operatively associated with pump 160 to stop its operation and prevent overflow. The off delay timer also preserves pump life in the event that there is a low level of oil in reservoir or the reservoir oil in not replaced by the user.

When new oil is fed into fry pot 20, it comes in above the oil line through separate piping 165 and top off oil inlet 107, preventing the new oil from coming in contact with used oil and from being contaminated before it enters pot 20. Further, higher entry point reduces the likelihood that solenoid valves 135, 145 and 150 will become clogged.

The temperature of the oil never drops more than approximately 5° F. from the set point because it is slowly added to fryer pot 20.

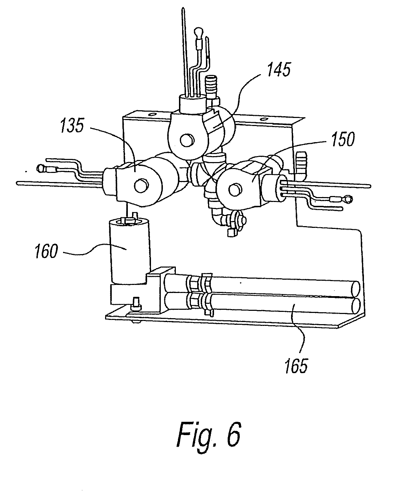

Referring to FIGS. 1 and 6, the housing 15 and reservoir 60 are shown. The oil used to fill fry pots 20, 25 and 30 is located in reservoir 60. To alert a user that oil in reservoir 60 is at a low level, a spring on which reservoir 60 rests expands to raise the reservoir and activate an alarm or light. Alternatively, the alarm or lamp 65 may be activated by an off delay timer operatively associated with pump 160 that detects that the predetermined expected interval to refill the fryer pot has been exceeded, indicating the reservoir is empty. Then the individual reservoir is removed and a new filled reservoir is inserted. Alternatively, a large single permanent reservoir remote from the fryer is used to refill the small reservoir in the housing or refill the pots directly to maintain optimum oil level in all fryer pots 20, 25 and 30.

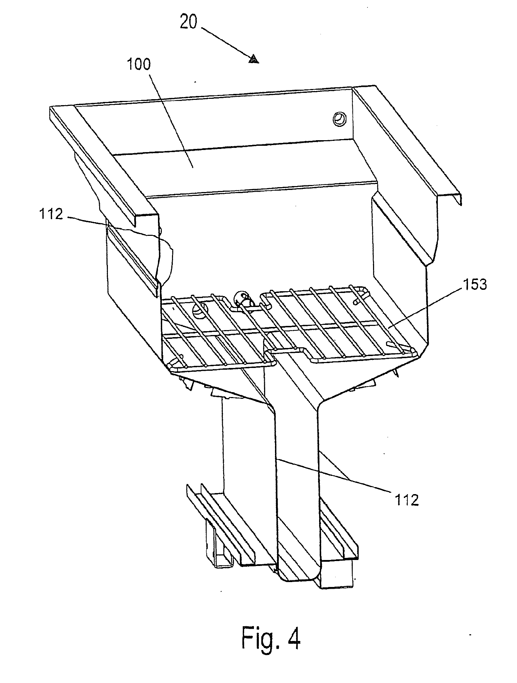

To further aid oil and food product quality and to minimize oil degradation, deep fryer 10 is also programmed with an automatic intermittent filtration cycle capability. The automated intermittent filtration cycle can be either user initiated or automatically initiated by time or the number of cook cycles fryer 10 has processed. Referring again to FIG. 4, fryer pot 20 has a drain valve 155, a drain valve actuator 130, a return valve 140 and a second actuator 130. Prior to draining cooking oil, the filter sequence includes a bubbling period of between 5 and 15 seconds to disturb any debris that may have come to rest on the inner surface of fryer pot 20.

Controller 39 can accept various settings, such as, for example, temperature and timing settings. For example, controller 39 is capable of counting the number cook cycles processed in fryer pot 20. After a predetermined number of cook cycles control panel 35 prompts the user with filter cycle indicator 75, such as a lamp or audible indicator. The user may depress a button on control panel 35 to commence a filtration cycle.

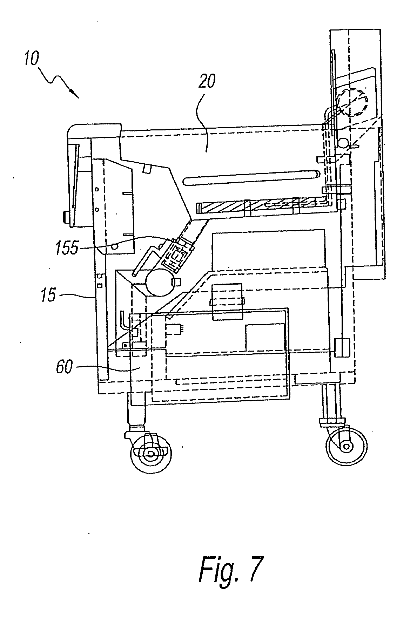

Referring to FIGS. 1 through 7, the components of the oil filtration cycle and the process are described in sequence. Each fryer pot 20, 25 and 30 is configured to minimize any crevices in which crumbs could possible collect. Fryer pot 20 will only be addressed for purposes of simplicity although their functions are identical. Near the beginning of the filter sequence air is pumped into the fryer pot through return valve 140 to create bubbles. The bubbles will disturb the cooking oil and shift the debris from the sides and crevices of fryer pot 20 so that they may be removed during draining. Cooking oil must be of a temperature that is warm enough to support a filtration cycle so that oil may freely flow through filtering cycle components. Automatic filtration cannot commence when sensor 111 senses a temperature below a preset temperature of approximately 300° F. to 320° F. If oil is too cool to commence a filtration cycle, feedback from temperature sensor 111 immersed in oil prevents initiation of an automatic filtration cycle. Alternatively, a user can disable the filtration cycle on specific fryer pots within a housing to limit cross contamination of cooking oil from incompatible food products.

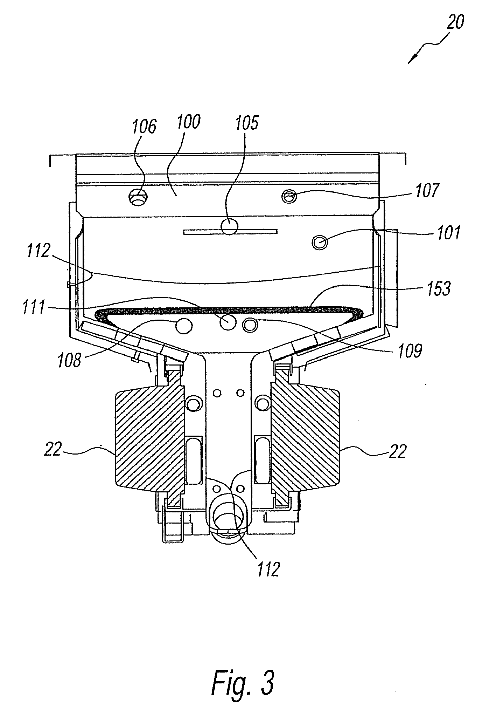

As shown in FIG. 3, fryer basket support rack 153 is configured to have minimal contact with inner surface of fryer pot 20 to minimize crumb collection zones. Support basket rack 153 of the instant invention does not have a lateral bar that rests along the inside surface of pot 20. Rack 153 is supported at four spaced locations along the inside of fryer pot to allow food falloff and debris to naturally migrate to the lower areas of the fryer and be easily removed during a filtration process. Minimizing crumb collection zones also increases the effectiveness of the bubbling/stirring phase of the filtration process in removing food falloff and debris. Fryer pot 20 has a drain valve 155 that is opened and closed by one of a pair of actuators 130. Drain valve 155 has a large internal diameter of approximately 1.25 inches in its fully open position to prevent clogging by debris formed during the cooking process. Beneath fryer pot 20 is a drain manifold 56 that collects oil from drain valve 155. Manifold 56 collects oil from each drain valve in deep fryer 10.

Oil passes from drain manifold 56 to a crumb basket 70, via downspout 71. Crumb basket 70 is a preliminary filter that removes large pieces of residual food product from oil. After oil passes through crumb basket 70, it is deposited in filter pan 73. Oil passes through crumb basket 70, and is pulled through a filter pad 76 and a filter screen 72 located in the bottom of filter pan 73. Filter screen 72 has a series of ridges and grooves on the lower surface thereof to permit oil to easily exit the filter pan. Filter pan 73 contains a hold down ring 74 to maintain position of filter pad 76 and filter screen 72. Oil is transferred through filter pump and motor assembly before being returned to fryer pot 20.

There are different types of methods for sensing the presence of oil before burners 22 are activated to prevent scorching of pot 20. One oil sensing method uses a fryer temperature probe 111 mounted within fryer pot 20 at a level which when satisfied would indicate that oil is covering the heat conduction areas 112. Controller 39 of the fryer monitors fryer temperature probe 111 and reacts to an abrupt temperature change to determine whether oil is present. The temperature change can be either an increase or decrease depending on the current temperature of the relatively cool fryer pot 20 and the temperature of the returning filtered oil. The temperature change must be larger than the normal cooling associated with an empty fryer pot. If the sensed temperature change is larger than a predetermined threshold then the burners are allowed to energize.

An additional method to insure the presence of oil can be used alone or in conjunction with the first method discussed above. The heating is restarted at a predetermined time or when the above method has been satisfied and heat is applied for a short time (approximately 10 to 12 seconds) and left off for a short time (approximately 15 to 25 seconds) for 4 to 10 cycles. Controller 39 is able to monitor the response of fryer temperature probe 111. If fryer temperature sensor probe 111 indicates a temperature change of less than approximately 3° F. within 6 seconds over the total elapsed time of the on/off cycles then the presence of oil is confirmed and the gas fired burners 22 can be restarted.

An additional method for sensing oil uses an active sensor consisting of a small auxiliary electrically heated probe 109 coupled with a temperature sensor probe 111 mounted in close proximity. During operation auxiliary heated probe 109 is energized during the interval when oil is expected to return to fryer pot 20. The activation of auxiliary heated probe 109 is confirmed by monitoring the temperature sensor probe 111, which will indicate a relatively high temperature when not surrounded by oil. When oil is present temperature sensor probe 111 will indicate a relatively low temperature because of the relatively high heat conducting oil. Once satisfied, the auxiliary heated probe 109 can be turned off.

As an alternative oil sensing method, fryer pot 20 could include a pressure switch sensor for determining when there is sufficient oil in the fryer pot to activate burners 22. Fryer pot 20 includes a standpipe 162 in front wall 142. Additional piping is used to communicate the pressure present at pressure tap 166 to a pressure switch located above the highest expected level of oil in the fryer pot. The location of the pressure switch is chosen above the oil line to minimize the opportunity for contamination with cooking oil. Standpipe 162 is relatively large compared to piping typically associated with industrial pressure sensors to minimize the opportunity for clogging. Standpipe 162 is positioned to build pressure after the oil rises above the lower opening of the pipe during refill after a filter sequence. Once the oil is sufficiently deep to cover the heat transfer areas, the pressure switch signals the control system that it is safe to activate burners 22. Standpipe 162 is positioned low enough in the fryer pot such that the pressure measured is in a range easily detected by standard industrial sensors but high enough that food fall off during cooking does not affect its operation.

As the oil has been filtered and enough oil has returned to the fryer pot to commence the heating process, sensor 101 will indicate that all the oil has been returned and that the filtration process can cease and the fryer can return to cooking mode. Input from sensor 101 ends the filtration process in one of three ways. Sensor 101 can be satisfied by sensing a reference temperature (290° F. to 310° F.), or by sensing a sudden change in temperature (7° F. to 10° F. in 3 to 5 seconds), or if the temperature at sensor 101 is the same temperature as was recorded just prior to the start of the filtration process.

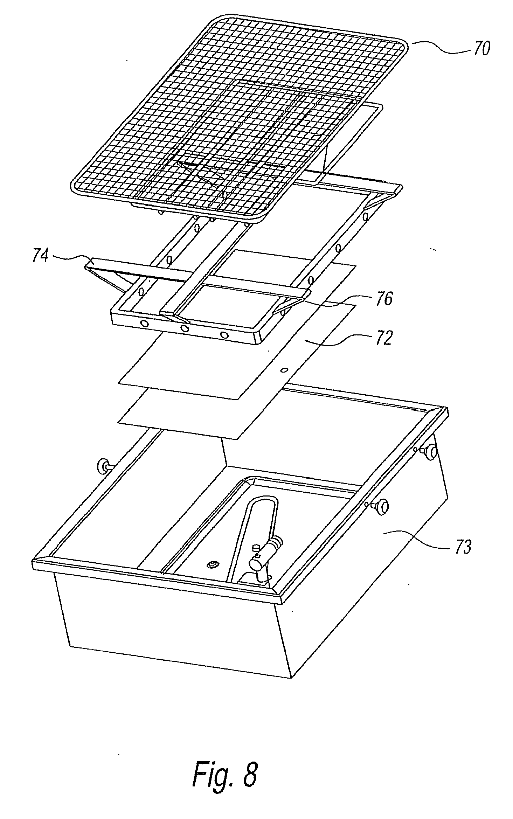

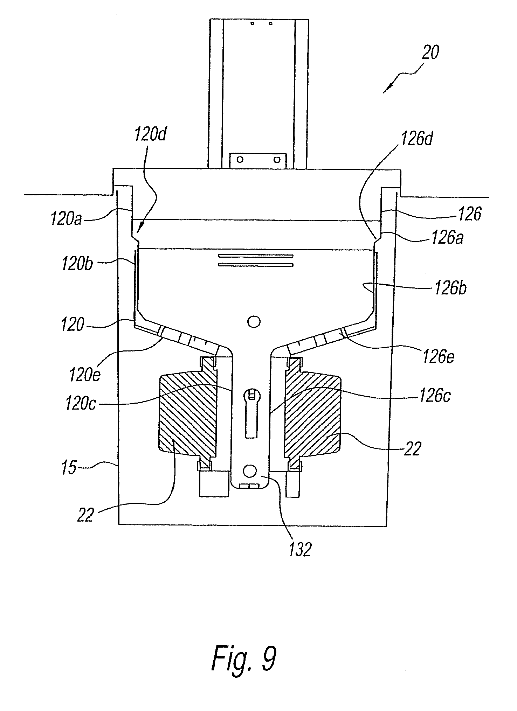

Deep fryer 10 further includes low oil volume capacity. By cooking with a low oil volume, deep fryer 10 is able to cook equivalent quantities of food with approximately 40% less oil that a conventionally sized deep fryer. Referring to FIGS. 8 and 9, in accordance with the disclosure, fryer pot 20, 25 and 30 are low oil volume fryer pots. Fryer pot 20 includes opposed sidewalls 120 and 126, as shown. Sidewalls 120 and 126 each include three vertical portions 120a, 120b, 120c and 126a, 126b and 126c, respectively. Sidewalls 120 and 126 have offsets 120d and 120e and 126d and 126e, respectively. Offsets 120d, 120e, 126d and 126e reduce the overall width of fryer pot 20. Sidewalls 120 and 126 form a relatively narrow chamber 132 or a cold zone to minimize circulation of cooking debris during use. Because of the offsets 120d, 120e, 126d and 126e, the width of cold zone 132 is narrower than the cold zone of a conventional fryer pot without such offsets. Thus, fryer pot 20 contains less oil volume than a conventional fryer pot while maintaining similar cooking area.

Fryer pot 20 has a front wall 142 and a rear wall 146. Front wall 142 is similar to a front wall of a conventional fryer pot; however, front wall 142 is more inboard in comparison to that of a convention fryer pot front wall. Rear wall 146 has two vertical portions 146a and 146b. Vertical portion 146a and 146b are connected by an offset 152 that is angled relative to both 146a and 146b. The offset 152 together with the inboard front wall 142 reduce the overall length of fryer pot 20 from both the front and the rear directions. Thus, while the walls of fryer pot 20 are offset to form a smaller volume pot, the passage for a fryer basket is not substantially reduced to prevent proper operation. Further, the smaller cold zone 132 formed from both sides of fryer pot 20 reduces the thermal gradient between cold zone 132 and the cooking region of fryer pot 20. The smaller thermal gradient reduces the thermal stresses that are experienced along pot walls.

In deep fryer 10, an on-off switch applies to all fryer pots in a single system. The automated filtration system can be disabled for each fryer pot within the controller for that fryer pot.

While the instant disclosure has been described to incorporate electric actuators, either hydraulic or pneumatic actuators could also be used for opening and closing the drain and return valves of the instant disclosure.

It should be understood that the foregoing description is only illustrative of the present invention. Various alternatives and modifications can be devised by those skilled in the art without departing from the scope of the present invention. Accordingly, the present invention is intended to embrace all such alternatives, modifications and variances.

## Claims

1. A deep fryer device for automatically filtering cooking oil comprising:
a deep fryer comprising a fryer pot;
a pump;
a first temperature sensor for the fryer pot for sensing the temperature of the cooking oil in the fryer pot to determine whether the temperature of the cooking oil in the fryer pot is at least a first preset temperature for initiating an oil filtering cycle;
a controller for monitoring the amount of food that has been cooked in the fryer pot since the previous filtering cycle and for receiving a signal from the first temperature sensor, the controller for initiating and controlling the filtering cycle, wherein the initiation of a filtration cycle occurs if the temperature of the cooking oil sensed is at least the preset temperature and if a predetermined amount of food has been cooked since the previous filtering cycle.

2. The device of claim 1 wherein the amount of food that is monitored by the controller is the number of food batches.

3. The device of claim 1 wherein the amount of food cooked that is monitored by the controller is the weight of the food that has been cooked.

4. The device according to claim 1 wherein the controller automatically initiates the filtering cycle and the predetermined amount of food cooked comprises cooking a predetermined number of cook cycles since the most recent prior filtration cycle.

5. The device according to claim 1 wherein the fryer pot comprises a drain valve, a return valve, and a first actuator and second actuator wherein the controller controls the first actuator to automatically open and close said drain valve to conduct a filtering cycle and the controller controls the second actuator to automatically open and close said return valve to conduct the filtering cycle.

6. The device according to claim 5 further comprising a plurality of fryer pots and each fryer pot comprises a drain valve, a return valve, and a first actuator and second actuator wherein the controller controls the first actuator to automatically open and close said drain valve to conduct a filtering cycle and the controller controls the second actuator to automatically open and close said return valve to conduct the filtering cycle, and the device includes a filter pan associated with said plurality of fryer pots, said filter pan further comprising a crumb basket, a filter pad and a filter screen wherein cooking oil passes through said filter pan before returning to said fryer pot.

7. The device according to claim 1, comprising a plurality of fryer pots wherein each of said plurality of fryer pots is a low volume fryer pot comprising a pair of opposed endwalls and a pair of opposed sidewalls and a bottom wall, wherein each of said pair of opposed endwalls has a first vertical portion and a second vertical portion that are each connected by an angled offset portion to decrease a volume of said fryer pot and each of said pair of opposed sidewalls further comprises three successive vertical portions, wherein each of said three successive vertical portions is inboard of a preceding vertical portion to thereby taper each of said pair of opposed sidewalls towards said bottom wall.

8. The device according to claim 1 wherein the controller automatically causes air to be introduced into the fryer pot to create bubbles to disturb the cooking oil and shift debris in the cooking oil for conducting the filtering cycle.

9. The device according to claim 1, wherein the controller prevents the initiation of the filtration cycle if the first temperature sensor senses a temperature below said preset temperature and said preset temperature is a temperature of approximately 300°F to 320°F.

10. The device according to claim 7 further comprising each of said plurality of fryer pots further comprises a drain valve, a return valve, and a first actuator and second actuator wherein the controller controls the first actuator to automatically open and close said drain valve to conduct a filtering cycle and the controller controls the second actuator to automatically open and close said return valve to conduct the filtering cycle, and a filter pan associated with said plurality of fryer pots, said filter pan further comprising a crumb basket, a filter pad and a filter screen wherein cooking oil passes through said filter pan before returning to said fryer pot.

11. The device according to claim 1 further comprising a burner for heating the cooking oil contained in the fryer pot, and after oil has been filtered and returned to the fryer pot the controller continues to monitor temperature to determine the presence of oil returned to the fryer pot, and the controller automatically activates the burner when it is automatically determined that oil has been returned to the fryer pot.

12. The device according to claim 11, further comprising a second temperature sensor for use in determining if all the oil has been returned to the fryer pot, and when said second temperature sensor senses a temperature change of from 7°F to 10°F in 3 to 5 seconds, all of the cooking oil has returned to said fryer pot and the burner is activated to commence cooking.

13. The device according to claim 11 further comprising a second temperature sensor for use in determining if all the oil has been returned to the fryer pot, and when said second temperature sensor senses a predetermined temperature of from about 290°F to 310°F, all of the cooking oil has returned to said fryer pot and burners are activated to commence cooking.

14. The device according to claim 1 further comprising:
a plurality of fryer pots disposed within said deep fryer;
a plurality of the first temperature sensors and a plurality of second temperature sensors, each of the fryer pots including a respective one of the first temperature sensors and a respective one of the second temperature sensors;
for each fryer pot a valve associated with that fryer pot for conducting the filtration cycle of that fryer pot and for each fryer pot a valve associated with the fryer pot for conducting an automatic filling cycle of that fryer pot, wherein the valve for the conducting an automatic filling cycle for the associated fryer pot is actuated by the associated second temperature sensor for that fryer pot to commence an automatic filling cycle of the associated fryer pot when said first temperature sensor senses a first predetermined oil temperature and said second temperature sensor senses a second predetermined temperature of the associated fryer pot.
